# EUROPÄISCHE PATENTANMELDUNG

(11) **EP 3 541 009 A1**
(43) Veröffentlichungstag der Anmeldung: **18.09.2019**
(21) Anmeldenummer: 18162049.3
(22) Anmeldetag: 15.03.2018
(51) Int. Cl.: H04L 9/38, H04L 29/06, H04L 12/46

(54) **VERFAHREN UND VORRICHTUNG ZUR SICHERSTELLUNG EINER KRYPTOGRAPHISCH GESCHÜTZTEN DATENÜBERTRAGUNG ZWISCHEN EINEM ERSTEN GERÄT UND EINEM ZWEITEN GERÄT**

(71) Anmelder: Siemens Aktiengesellschaft, 80333 München (DE)
(72) Erfinder: Aschauer, Hans, 81829 München (DE); Falk, Rainer, 85586 Poing (DE); Fries, Steffen, 85598 Baldham (DE); Heintel, Markus, 81377 München (DE); Klasen, Wolfgang, 85521 Ottobrunn (DE); Pfau, Axel, 80333 München (DE); Sperl, Franz, 92526 Oberviechtach (DE); Trummer, Georg, 92224 Amberg (DE); Zwanzger, Johannes, 85579 Neubiberg (DE)

(57) **Zusammenfassung**

Die Erfindung beansprucht Verfahren zur Sicherstellung einer kryptographisch geschützten Datenübertragung zwischen einem ersten Gerät (FD4, GW) und einem zweiten Gerät (FD5), aufweisend folgende Schritte:
- Erzeugen und Bereitstellen einer fehlerbehafteten Sicherheitsinformation für das erste Gerät,
- Übertragen von Daten zwischen dem ersten und dem zweiten Gerät über eine Datenübertragungsschnittstelle (N), welche kryptographisch mit Hilfe der fehlerbehafteten Sicherheitsinformation geschützt und/oder verändert werden,
- Überprüfen dieser übertragenen Daten und/oder der übertragenen Sicherheitsinformation, und
- Ausgeben zumindest eines Überprüfungsergebnisses.

## Beschreibung

Die Erfindung betrifft ein Verfahren zur Sicherstellung einer kryptographisch geschützten Datenübertragung zwischen einem ersten Gerät und einem zweiten Gerät sowie zugehörige Vorrichtungen und ein Computerprogramm(produkt).

Es besteht ein Bedarf, um mit IT-Security-Mechanismen Produkte, beispielsweise Geräte (z.B. Steuergeräte, Internet-der-Dinge (IoT)-Geräte), Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge (IoT), von cyberphysikalischen Systemen, von Automatisierungssystemen der Energietechnik, Verkehrstechnik, Gebäudetechnik oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Manipulationsgeschützt geht in der vorliegenden Beschreibung über den Begriff "Security" hinaus. Hierbei werden nicht nur die genannten kryptographischen bzw. Security-Methoden eingesetzt, sondern auch die Datenübertragung verlässlich gegen Angriffe bzw. Fremdzugriffe von außen sichergestellt.

Industrielle Geräte, z.B. Steuergeräte, Feldgeräte, IoT-Geräte oder IoT-Gateways, verwenden eine Mehrzahl von kryptographischen Schlüsseln, z.B. um sich zu authentisieren, um Integrität von gespeicherten Daten und Programmcode zu schützen, um Firmware-Updates zu prüfen und zu entschlüsseln, um Kommunikationspartner zu authentisieren, um einen Sitzungsschlüssel zu bilden und um die Integrität und ggf. die Vertraulichkeit von Projektierungs- und Konfigurationsdaten zu schützen. Um Daten, vor allem Steuerdaten, zu übertragen, können die genannten Geräte mit einer Datenschnittstelle ausgestattet sein, die drahtgebunden oder auch als Drahtlos-Schnittstelle, z.B. eine WLAN-, eine Bluetooth- oder eine NFC-Schnittstelle (NFC: Near Field Communication) ausgebildet und eingerichtet sein kann. Mit Hilfe dieser Datenschnittstelle kann das Gerät an ein Netzwerk angebunden werden bzw. mit anderen Geräten kommunizieren. Desweiteren ist es möglich, die Kommunikation optisch beispielsweise über Lichtwellenleiter zu leiten.

Es sind weitere drahtlose bzw. funkbasierte Übertragungstechniken hierbei einsetzbar (z.B. Safety over WLAN wie z.B. ProfiSafe, WiMax, Cloud Robotics, GSM, UMTS, LTE, 5G, Vehicle-2-X-Communication für autonome Fahrzeuge bzw. autonomes Fahren, funkbasierte Zugsicherung ETCS). Auch kann funkbasiert eine Positionsinformationen (PVT: position, velocity, time) über ein Satellitennavigationssystem (GPS, Galileo, Beidou, Glonass) empfangen werden, die für eine Steuerungsfunktion des Geräts verwendet wird.

Verschlüsselungsgeräte werden verwendet, um eine Datenkommunikation über offene Netzwerke gegen Abhören und/oder Manipulation zu schützen. Es sind Verschlüsselungsprotokolle auf unterschiedlichen Protokollschichten bekannt, insbesondere MACsec (802.1ae, 802.1af), WLAN Encryption (IEEE 802.11 WPA2, WPA3), Mobilfunkkommunikationssicherheit (2G, UMTS, LTE, 5G), IPsec/IKEv2, TLS, OpenVPN, JSON Web Encryption, S/MIME. Diese Protokolle können von speziellen Verschlüsselungsgeräten wie z.B. einem VPN-Gateway oder einem IoT-Gateway realisiert werden, oder ein Gerät (z.B. Feldgerät, Steuergerät, speicherprogrammierbare Steuerung, IO-Modul, IoT-Gerät) kann selbst eine kryptographisch geschützte Kommunikation realisieren.

Es besteht ein Bedarf, die korrekte Funktion einer kryptographisch geschützten Kommunikation sicherzustellen, insbesondere bei der Inbetriebnahme und im Service.

Es ist Aufgabe der vorliegenden Erfindung, Verfahren und Vor- bzw. Einrichtungen zur Sicherstellung einer kryptographisch geschützten Datenübertragung zwischen einem ersten Gerät und einem zweiten Gerät mit gegenüber dem oben genannten Stand der Technik zu verbessern bzw. bereitzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Verfahren zur Sicherstellung einer kryptographisch geschützten Datenübertragung zwischen einem ersten Gerät und einem zweiten Gerät, aufweisend folgende Schritte:
- Erzeugen und Bereitstellen einer fehlerbehafteten Sicherheitsinformation für das erste Gerät,
- Übertragen von Daten zwischen dem ersten und dem zweiten Gerät über eine Datenübertragungsschnittstelle, welche kryptographisch mit Hilfe der fehlerbehafteten Sicherheitsinformation geschützt und/oder verändert werden,
- Überprüfen dieser übertragenen Daten und/oder der übertragenen Sicherheitsinformation,
- Ausgeben zumindest eines Überprüfungsergebnisses.

Eine Sicherheitsinformation kann hierbei ein Schlüssel bzw. Ableitfunktion eines Schlüssels oder auch ein kryptographisch geschütztes digitales Zertifikat sein, die für die Kommunikation mit dem zweiten Gerät bereitgestellt wird. Die Daten können reine Anforderungs-/Request-Nachrichten oder auch Nutzdaten, ggf. Testnutzdaten sein.

Eine Weiterbildung der Erfindung sieht vor, dass die Überprüfung der Sicherheitsinformation eine Überprüfung auf ein Fehlen der Sicherheitsinformation und/oder eine Überprüfung auf eine fehlerhafte und/oder unvollständige Sicherheitsinformation und/oder eine Überprüfung auf eine abgelaufene Gültigkeitsdauer der Sicherheitsinformation umfasst.

Wenn keine Rückmeldung vor allem im Form des Überprüfungsergebnisses erfolgt und/oder wenn der fehlerbehaftete kryptographische Schutz und/oder die Veränderung der übertragenen Daten (können auch Test-Nutzdaten sein) vom zweiten Gerät durch das Überprüfen erkannt worden ist, kann eine Folgemaßnahme bzw. Fehlerbehandlung eingeleitet werden. Es ist möglich, dass eine voreingestellte Zeitvorgabe abläuft und damit erkennbar ist, dass das zweite Gerät bzw. Gegenstelle die fehlerbehaftete Sicherheitsfunktion und/oder die veränderten Daten nicht als gültig erkannt hat. Die Fehlerbehandlung, z.B. physikalische Trennung des Geräts vom Datenübertragungspfad, Neustart des Geräts, Sperren, des Geräts, Löschen von Schlüsseln, Ausgabe von Fehler-/Warnnachrichten etc., kann abhängig vom Übertragungsprotokoll z.B. TCP, UDP, IPsec, TLS; oder eines darüber übertragenen Applikationsprotokolls wie z.B. OPC UA, HTTP, XMPP, MQTT) erfolgen. Es ist denkbar, dass bei einem solchen Zeitablauf ein Fehlerbetriebszustand aktiviert wird, um den regulären Betriebszustand und damit die Datenübertragung zu sperren.

Die Folgemaßnahme kann eine spezifische oder unspezifische Antwort-Nachricht auf die Datenübertragung sein.

Somit wird mit hoher Verlässlichkeit sichergestellt, dass bei fehlender bzw. fehlerbehafteten und/oder unzulässigen und/oder ungültiger Security-Konfiguration, die Gegenstelle die nicht ordnungsgemäß kryptographisch geschützten Daten tatsächlich als ungültig erkennt. Es kann hiermit im laufenden Betrieb, bei der Inbetriebnahme oder einem Service geprüft werden, dass die kryptographischen Schutzmechanismen zum Schutz der Datenübertragung tatsächlich wirksam sind.

Eine Weiterbildung der Erfindung sieht vor, dass sich zumindest das erste Gerät in einem Fehlerfunktionsüberprüfungszustand befindet. der Fehlerfunktionsüberprüfungszustand durch einen Schalter bzw. Taster aktivierbar ist oder temporär und/oder periodisch aktiviert wird. Der Taster kann ein physikalischer Taster am Gerät sein, ein Schlüsselschalter, eine Steckbrücke, ein logischer Schalter in einer lokalen Bedienfunktion - z.B. im Service-Menü - oder ein logischer Schalter, der remote zugreifbar ist z.B. über eine Web-basierte Service-Schnittstelle. Der Fehlerfunktionsüberprüfungszustand kann in einer weiteren Ausführungsform nur dann aktivierbar sein, wenn sich zumindest das erste Gerät in einem Service-Betriebszustand befindet.

Ein weiterer Aspekt der Erfindung ist eine Vorrichtung - beispielsweise ein erstes Gerät oder ein Gateway - zur Sicherstellung einer kryptographisch geschützten Datenübertragung zu einem Gerät, aufweisend:
- Mittel zum Erzeugen und Bereitstellen einer fehlerbehafteten Sicherheitsinformation vorzugsweise im ersten Gerät,
- Mittel zum Übertragen von Daten zum Gerät über eine Datenübertragungsschnittstelle, welche kryptographisch mit Hilfe der behafteten Sicherheitsinformation geschützt und/oder verändert sind,
- Mittel zum Empfang zumindest eines Überprüfungsergebnisses nach Überprüfung dieser übertragenen Daten und/oder der übertragenen Sicherheitsinformation vorzugsweise durch das zweite Gerät.

Ein weiterer Aspekt der Erfindung ist eine Vorrichtung - z.B. ein zweites Gerät bzw. die Gegenstelle - zur Sicherstellung einer kryptographisch geschützten Datenübertragung von einem Gerät, aufweisend:
- Mittel zum Empfang von Daten von einem Gerät über eine Datenübertragungsschnittstelle, welche kryptographisch mit Hilfe einer zuvor erzeugten und bereitgestellten fehlerbehafteten Sicherheitsinformation geschützt und/oder verändert sind,
- Mittel zum Ausgeben zumindest eines Überprüfungsergebnisses nach Überprüfung dieser übertragenen Daten und/oder der übertragenen Sicherheitsinformation vorzugsweise durch das zweite Gerät.

Die Überprüfung kann von dieser Vorrichtung durchgeführt werden oder von einem mit dieser Vorrichtung gekoppelten Gerät oder Modul bzw. Einheit.

Beide Vorrichtungen können in einer Anordnung bzw. einem System angeordnet sein und somit miteinander kommunizieren.

Die Mittel können Hardware-, Firmware und/oder Softwareeinheiten bzw. -module sein.
Unter Bereitstellen kann verstanden werden, dass die Sicherheitsinformation selbst den oben genannten Mitteln z.B. in Form einer Verarbeitungseinheit bzw. CPU bereitgestellt wird. Unter Bereitstellen kann ebenso verstanden werden, dass der Verarbeitungseinheit eine kryptographische Operation bereitgestellt wird, wobei die kryptographische Operation die bereitgestellte Sicherheitsinformation verwendet. Die kryptographische Operation kann insbesondere eine Verschlüsselung, eine Entschlüsselung, eine Bildung einer kryptographischen Prüfsumme (Message Authentication Code, digitale Signatur) oder eine Prüfung einer kryptographischen Prüfsumme sein.

Des Weiteren wird ein Computerprogramm(produkt) umfassend Programm-Code, der von mindestens einem Prozessor ausgeführt werden kann und der bewirkt, dass der mindestens eine Prozessor das erfindungsgemäße Verfahren und dessen Ausführungsformen ausführt. Das Computerprogramm kann verteilt auf den Vorrichtungen der vorstehend genannten Art ablaufen oder als Computerprogrammprodukt auf einem computerlesbaren Medium gespeichert sein.

Zusätzlich kann eine Variante des Computerprogramm(produktes) mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Die Vorrichtungen, die Anordnung und das Computerprogramm (produkte) können entsprechend der Weiterbildungen/Ausführungsformen des vorgenannten Verfahrens und deren Weiterbildungen/Ausführungsformen ausgebildet sein.

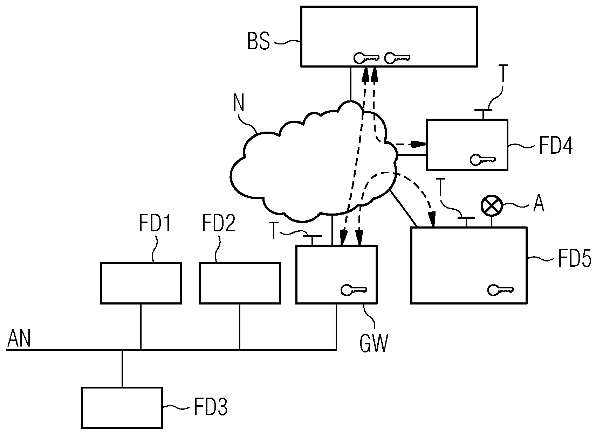

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Figur näher erläutert werden.

Die Figur zeigt schematisch eine (Funk-)Netzwerkumgebung und Geräte, beispielsweise Feldgeräte FD1 bis FD5.

Jedes Feldgerät kann auch ein Mobilgerät sein, z.B. ein Mobilpanel. Diese Geräte können an ein Automatisierungsnetz AN mit einem Gateway GW, möglicherweise als VPN (Virtual Privat Network) Gateway ausbildet, angebunden sein. Sie können auch über eine Datenübertragungsschnittstelle N in Form einer Funkübertragung mit einem Backend Dienst BS verbunden sein.

Ein erstes Gerät - das Gateway GW bzw. ein Feldgerät z.B. FD4 - kann eine kryptographisch geschützte VPN-Verbindung zur Datenübertragung zu einem zweiten Gerät - z.B. einem Backend - Dienst BS oder auch zu einem weiteren Feldgerät z.B. FD 5 - aufbauen, wobei der Backend-Dienst z.B. in Form eines IoT Cloud Dienstes oder in Form einer sogenannten Edge Cloud ausgebildet sein kann. Für den kryptographischen Schutz der zu übertragenden Daten kann eine Sicherheitsinformation in Form eines kryptographischen Schlüssels und/oder in Form eines Zertifikats und/oder in Form eines Passworts und/oder in Form einer PIN verwendet werden. Dies wird in der Figur mit den Schlüsselabbildungen angedeutet. Die Sicherheitsinformation kann auf dem Gerät selbst gespeichert sein oder auf einem mit dem Gerät gekoppelten Konfigurationsspeichermodul oder einem Security- bzw. Sicherheitsmodul bzw. -einheit.

Die Geräte verfügen jeweils über einen Taster T zum Aktivieren eines Fehlerfunktionsüberprüfungszustands. Weiterhin kann eine Anzeige vorhanden sein, z.B. eine Warnleuchte, die den Empfang von ungültigen Datenpaketen anzeigt. Dies ist für das Feldgerät FD5 dargestellt. Wenn auf dem VPN-Gateway GW der Fehlfunktionsüberprüfungszustand aktiviert wird, so kann dies optisch beim Gerät FD5 erkannt werden, indem die Warnleuchte anspringt. D.h. dass FD5 die ungültigen Datenpakete als solche erkennt.

In dem Fehlerfunktionsüberprüfungszustand kann z.B. das Gerät FD4 oder das VPN-Gateway GW kryptographisch fehlerhaft geschützte Daten(pakete) aussenden. Die ermöglicht, zu überprüfen, dass die kryptographischen Schutzfunktionen der Gegenstelle im Beispiel FD5 funktionieren und die Datenpakete als fehlerhaft abgewiesen werden.

In einer weiteren Ausführungsform (nicht in der Figur dargestellt) stellt das Gerät FD4 oder das VPN-Gateway GW einem gekoppelten Security-Modul eine Fehlerfunktionsüberprüfungs-Aktivierungssignal bereit, wenn der Taster T betätigt wird. Darauf aktiviert das Security-Modul einen Fehlfunktionsüberprüfungszustand, bei dem das Security-Modul fehlerhafte kryptographische Daten dem Gerät FD4 bzw. dem VPN-Gateway GW bereitstellt.

In einer weiteren Ausführungsform weist ein Security-Modul selbst einen Taster T auf, um einen Fehlfunktionsüberprüfungszustand des Security-Moduls zu aktivieren. Dies hat den Vorteil, dass ein Fehlfunktionstest unabhängig vom gekoppelten Gerät durchführbar ist. Dadurch kann insbesondere überprüft werden, ob das gekoppelte Gerät das Security-Modul tatsächlich verwendet.

In einer Ausführungsform ist es weiterhin möglich, dass ein Security-Modul ein Statussignal bereitstellt, z.B. über eine optische Anzeige oder über ein elektrisches Schaltsignal. Dadurch kann das Security-Modul verlässlich anzeigen, dass vom Security-Modul als ungültig erkannte Datenpakete bzw. Teile von Datenpaketen als solche vom Security-Modul erkennt werden. Dazu werden dem Security-Modul vom gekoppelten Gerät Datenpakete bzw. Teile von Datenpaketen, z.B. eine kryptographische Prüfsumme oder eine digitale Signatur, vom gekoppelten Gerät zur Prüfung bereitgestellt.

Fehlfunktionen können umfassen:
- Verwendung eines modifizierten kryptographischen Schlüssels
- Verwendung einer modifizierten, fehlerhaften Implementierung eines kryptographischen Verfahrens (Verschlüsselung, Integritätsschutz)
- Verwendung einer fehlerhaften Schlüsselableitung
- Verwendung bereits abgelaufenen Schlüsselmaterials bzw. sonstiger Parameter
- Verwendung von ungültigen, modifizierten Credentials (z.B. digitales Zertifikat, JSON Web Token)
- Ändern der Nutzdaten

Es kann eine einzelne Fehlfunktion getestet werden. Vorzugsweise wird jedoch bei einem Fehlfunktionstest eine Mehrzahl von Fehlfunktionen nacheinander aktiviert. Dies hat den Vorteil, dass die korrekte Funktion von mehreren Teilfunktionen einer kryptographisch geschützten Datenübertragung überprüfbar ist.

Für die fehlerhafte Datenübertragung können grundsätzlich unterschiedliche Nutzdaten verwendet werden, z.B. echte Nutzdaten, vorgebbare Test-Nutzdaten oder (pseudo-)zufällig generierte Test-Nutzdaten. Die Überprüfung kann durch die Gegenstelle - im Beispiel FD5 - erfolgen. Es können z.B. Fehlereinträge in deren Logdaten geprüft werden. Auch kann geprüft werden, ob die Verbindung "zusammenbricht", d.h. keine für die Anwendung, z.B. die Ansteuerung von Sensoren/Aktoren über das Automatisierungsnetzwerk AN (z.B. Profinet oder OPC UA) durch eine Speicherprogrammierbare Steuerung SPS, nutzbare Verbindung mehr besteht. In einer weiteren Ausführungsform zeigt eine Fehlerstatus-Anzeige eines Geräts (Gegenstelle, im Beispiel Gerät FD5) oder eines daran gekoppelten Security-Moduls an, wenn die Prüfung empfangener Daten ergibt, dass diese ungültig sind.

In einer Ausführungsform überprüft das Gerät FD4 selbst die Kommunikationsverbindung zur Gegenstelle, indem es ungültige bzw. fehlerbehaftete kryptographisch geschützte Anfrage-Nachrichten (Request-Nachrichten) überträgt und eine evtl. empfangene Antwort-Nachrichten (Response-Nachrichten) prüft. Eine ungültig kryptographisch geschützte Request-Nachricht darf dabei z.B. nicht durch eine Response-Nachricht beantwortet werden. In einer Ausführungsform kann auch eine (fehler)spezifische Response-Nachricht geschickt werden und damit dem Initiator signalisiert werden, dass ein Fehler in der kryptographisch geschützten Request-Nachricht erkannt wurde. In einer weiteren Ausführungsform kann auch ein (fehler-)unspezifisches Muster als Response geschickt werden, um eine Fehlererkennung anzuzeigen. Dabei können weiterhin auch nicht fehlerbehaftete bzw. gültig kryptographisch geschützte Request-Nachrichten ausgesendet werden, auf die eine gültige Response-Nachricht erwartet wird. Dadurch kann überprüft werden, dass die Request-Response-Kommunikation grundsätzlich funktioniert und nur kryptographisch ungültig geschützte Request-Nachrichten nicht beantwortet werden oder etwa mit einem entsprechenden Muster beantwortet werden.
Die Information, ob eine Nachricht die Gegenseite erreicht hat, kann ggf. auch aus dem übergeordneten Übertragungsprotokollkontext abgeleitet werden. Beispielsweise wird ein vom VPN-Endpunkt auf der Empfangsseite verworfenes TCP-Segment nicht durch ein ACK (Acknowlegde = Bestätigung) bestätigt. Das VPN-Gateway GW auf der Senderseite könnte beispielsweise überwachen, ob das willentlich veränderte TCP Segment erneut gesendet wird.

Die temporäre Aktivierung des Fehlerfunktionsüberprüfungszustands erfolgt vorzugsweise durch einen Taster, eine Steckbrücke oder einen Schlüsselschalter. In einer anderen Ausführungsform erfolgt ein Test wiederholt automatisch, z.B. einmal täglich. Weiterhin kann diese Funktion in einer Ausführungsform doppelt abgesichert sein. So kann der Taster/Schalter z.B. nur nutzbar sein, wenn das Gerät sich in einem Service-Betriebszustand befindet. D.h. ein Wechsel in den Fehlerfunktionsüberprüfungszustand ist nur von einem Service-Betriebszustand aus möglich, nicht jedoch von einem normalen, operativen Betriebsmodus. Ein aktivierter Fehlerfunktionsüberprüfungszustand kann optisch oder akustisch angezeigt werden, um sicherzustellen, dass er nicht versehentlich verwendet wird. Die Aktivierung des Fehlerfunktionsüberprüfungszustand kann geloggt werden. Weiterhin kann der Fehlerfunktionsüberprüfungszustand nur temporär und/oder periodisch aktivierbar sein z.B. für die Dauer von 1 Sekunde oder 10 Sekunden, und sich danach automatisch deaktivieren, auch wenn der Taster/Schalter betätigt bleibt. Die automatische Aktivierung eines Fehlerfunktionsüberprüfungszustands kann in Abhängigkeit einer aktuellen Operation (Prozessschritt) durchgeführt werden, um zu vermeiden, dass der Test während einer kritischen Funktion des Gerätes angestoßen wird. Ebenso kann eine kritische Funktion den Fehlerfunktionsüberprüfungszustand sofort beenden.

Im folgenden sind Beispiele gültige Datenpakete gezeigt, welche eine Prüfsumme (= MIC) umfassen:
Dabei bedeutet SRC = Source/Quelle, DST =Destination/Ziel, Prot = die Art des Übertragungsprotokolls, SPort = den Port der Quelle und DPort den Port des Ziels, Data = Daten, MIC = Prüfsumme für die kryptographische Operation, CRC = Prüfsumme, um die Reihenfolge bzw. Anzahl der zu erwartenden Datenpakete prüfen zu können.

MIC-Protected Data Packet bedeutet ein mit einer Prüfsumme geschütztes Datenpaket. MIC-Protected Data Packet bedeutet ein mit einer verschlüsselten Port Information und verschlüsselten Daten, das mit der Schattierung angedeutet ist.
Die im folgenden mit " ' " gekennzeichneten Felder deuten die ungültige Testdatenpakete als fehlerbehaftete Sicherheitsinformation an.

**MIC-Protected Data Packet**

| | | | | | | | |
|---|---|---|---|---|---|---|---|
| SRC | DST | Prot | SPort | DPort | Data | MIC | CRC |

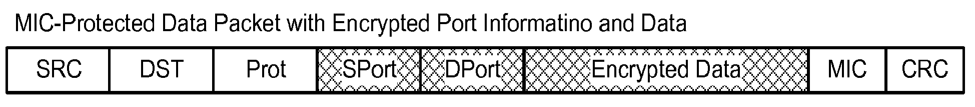

**MIC-Protected Data Packet**

| | | | | | | | |
|---|---|---|---|---|---|---|---|
| SRC' | DST' | Prot' | Sport' | Dport' | Data' | MIC' | CRC' |

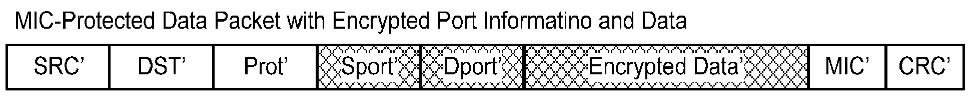

Ungültige Testdatenpakete können z.B. eine oder mehrere der dargestellten modifizierten Änderungen aufweisen. D.h. es können grundsätzlich alle Protokollfelder modifiziert werden oder ungültig gesetzt werden. Auch kann die Länge z.B. des Felds "Data' " kürzer oder länger als die von "Data" sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, Netzwerkprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur Sicherstellung einer kryptographisch geschützten Datenübertragung zwischen einem ersten Gerät (FD4, GW) und einem zweiten Gerät (FD5), aufweisend folgende Schritte:
- Erzeugen und Bereitstellen einer fehlerbehafteten Sicherheitsinformation für das erste Gerät,
- Übertragen von Daten zwischen dem ersten und dem zweiten Gerät über eine Datenübertragungsschnittstelle (N), welche kryptographisch mit Hilfe der fehlerbehafteten Sicherheitsinformation geschützt und/oder verändert werden,
- Überprüfen dieser übertragenen Daten und/oder der übertragenen Sicherheitsinformation, und
- Ausgeben zumindest eines Überprüfungsergebnisses.

2. Verfahren nach dem vorhergehenden Anspruch, **dadurch gekennzeichnet, dass** abhängig vom Überprüfungsergebnis zumindest eine Folgemaßnahme eingeleitet wird.

3. Verfahren nach dem vorhergehenden Anspruch, **dadurch gekennzeichnet, dass** die Folgemaßnahme eine Antwort-Nachricht auf die Datenübertragung ist.

4. Verfahren nach einem der vorhergehenden Ansprüche, **dadurch gekennzeichnet, dass** sich zumindest das erste Gerät in einem Fehlerfunktionsüberprüfungszustand befindet.

5. Verfahren nach einem der vorhergehenden Ansprüche, **dadurch gekennzeichnet, dass** der Fehlerfunktionsüberprüfungszustand durch einen Schalter aktivierbar ist oder temporär und/oder periodisch aktiviert wird.

6. Verfahren nach einem der vorhergehenden Ansprüche, **dadurch gekennzeichnet, dass** der Fehlerfunktionsüberprüfungszustand nur dann aktivierbar ist, wenn sich zumindest das erste Gerät in einem Service-Betriebszustand befindet.

7. Verfahren nach einem der vorhergehenden Ansprüche, **dadurch gekennzeichnet, dass** die Überprüfung der Sicherheitsinformation eine Überprüfung auf ein Fehlen der Sicherheitsinformation und/oder eine Überprüfung auf eine fehlerhafte und/oder unvollständige Sicherheitsinformation und/oder eine Überprüfung auf eine abgelaufene Gültigkeitsdauer der Sicherheitsinformation umfasst.

8. Vorrichtung (FD4, GW) zur Sicherstellung einer kryptographisch geschützten Datenübertragung zu einem Gerät (FD5), aufweisend:
- Mittel zum Erzeugen und Bereitstellen einer fehlerbehafteten Sicherheitsinformation,
- Mittel zum Übertragen von Daten zum Gerät über eine Datenübertragungsschnittstelle (N), welche kryptographisch mit Hilfe der behafteten Sicherheitsinformation geschützt und/oder verändert sind, und
- Mittel zum Empfang zumindest eines Überprüfungsergebnisses nach Überprüfung dieser übertragenen Daten und/oder der übertragenen Sicherheitsinformation.

9. Vorrichtung (FD5) zur Sicherstellung einer kryptographisch geschützten Datenübertragung von einem Gerät, aufweisend:
- Mittel zum Empfang von Daten von einem Gerät (FD4, GW) über eine Datenübertragungsschnittstelle (N), welche kryptographisch mit Hilfe einer zuvor erzeugten und bereitgestellten fehlerbehafteten Sicherheitsinformation geschützt und/oder verändert sind, und
- Mittel zum Ausgeben zumindest eines Überprüfungsergebnisses nach Überprüfung dieser übertragenen Daten und/oder der übertragenen Sicherheitsinformation.

10. Vorrichtung nach einem der vorhergehenden Vorrichtungsansprüche, **dadurch gekennzeichnet, dass** abhängig vom Überprüfungsergebnis zumindest eine Folgemaßnahme eingeleitet wird.

11. Vorrichtung nach dem vorhergehenden Anspruch, **dadurch gekennzeichnet, dass** die Folgemaßnahme eine Antwort-Nachricht auf die Datenübertragung ist.

12. Vorrichtung nach einem der vorhergehenden Vorrichtungsansprüche, **dadurch gekennzeichnet, dass** sich die Vorrichtung in einem Fehlerfunktionsüberprüfungszustand befindet.

13. Vorrichtung nach einem der vorhergehenden Vorrichtungsansprüche, **dadurch gekennzeichnet, dass** der Fehlerfunktionsüberprüfungszustand durch einen Schalter aktivierbar ist oder temporär und/oder periodisch aktivierbar ist.

14. Vorrichtung nach einem der vorhergehenden Vorrichtungsansprüche, **dadurch gekennzeichnet, dass** der Fehlerfunktionsüberprüfungszustand nur dann aktivierbar ist, wenn sich die Vorrichtung in einem Service-Betriebszustand befindet.

15. Vorrichtung nach einem der vorhergehenden Vorrichtungsansprüche, **dadurch gekennzeichnet, dass** die Überprüfung der Sicherheitsinformation eine Überprüfung auf ein Fehlen der Sicherheitsinformation und/oder eine Überprüfung auf eine fehlerhafte und/oder unvollständige Sicherheitsinformation und/oder eine Überprüfung auf eine abgelaufene Gültigkeitsdauer der Sicherheitsinformation umfasst.

16. Anordnung aufweisend die Vorrichtungen (FD4, GW; FD5) nach einem der vorhergehenden Vorrichtungsansprüchen, welche kryptograhisch geschützte Daten miteinander austauschen können.

17. Computerprogrammprodukt mit Programmcodemitteln zur Durchführung des Verfahrens nach einem der vorangehenden Verfahrensansprüche, wenn es verteilt auf den Vorrichtungen nach einem der vorangehenden Ansprüche 8 bis 16 abläuft oder auf einem computerlesbaren Medium gespeichert ist.
